(19) Europäisches Patentamt
European Patent Office
Office européen des brevets

(11) EP 2 824 524 A2

(12) EUROPEAN PATENT APPLICATION

(43) Date of publication:
14.01.2015 Bulletin 2015/03

(51) Int Cl.:
G05B 19/404 (2006.01)

(21) Application number: 14174943.2

(22) Date of filing: 30.06.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 02.07.2013 JP 2013138965

(71) Applicant: JTEKT CORPORATION
Osaka-shi
Osaka 542-8502 (JP)

(72) Inventors:
• Sasaki, Yuji
Osaka-shi, Osaka 542-8502 (JP)
• Iwai, Hideki
Osaka-shi, Osaka 542-8502 (JP)
• Sakurai, Yasumasa
Osaka-shi, Osaka 542-8502 (JP)

(74) Representative: TBK
Bavariaring 4-6
80336 München (DE)

(54) **Thermal displacement correction method and thermal displacement correction unit**

(57)     There is provided a thermal displacement correction method for a machine tool, which makes it possible to more accurately correct a thermal displacement of a machining point by executing a thermal displacement estimation process individually on a movable body such as a table and taking into account a displacement of a scale and a degree of inclination of the movable body. The thermal displacement correction method includes: a thermal displacement estimating step (91) of estimating a thermal displacement of a support and a thermal displacement of the movable body independently of each other; a scale positional displacement acquiring step (92) of acquiring a displacement of an attachment position of a scale that detects a position of the movable body; a movable body actual position acquiring step (93) of acquiring an actual position (g) of the movable body relative to the support after thermal deformation of the movable body; an inclination degree computing step (94) of computing a degree (S) of inclination of the movable body at the actual position (g); a resultant displacement computing step (95) of acquiring a resultant displacement that is a resultant of the thermal displacement of the support and the thermal displacement of the movable body; a correction value computing step (96) of computing a correction value based on the resultant displacement; and a correcting step (97) of correcting a command position of the movable body based on the correction value.

FIG. 6

## Description

BACKGROUND OF THE INVENTION

1. Field of the Invention

The invention relates to a thermal displacement correction method and a thermal displacement correction unit that are adopted for a machine tool.

2. Description of the Related Art

For example, Japanese Patent Application Publication 2006-65716 describes a conventional thermal displacement correction method in which a thermal displacement is estimated with the use of a model formulated on the supposition that the entirety of a machine tool is a single integrated body, and a thermal displacement at a machining point is corrected.

However, in a machine tool including, for example, a movable table, if a thermal displacement is estimated on the supposition that the entirety of the machine tool is a single integrated body, displacements of scales for detecting positions of the table and the like are not taken into account. Thus, the position to which the table is moved is not accurately determined. This exerts an influence on the accuracy of correction of a thermal displacement.

SUMMARY OF THE INVENTION

One object of the invention is to make it possible to more accurately correct a thermal displacement of a machining point by executing a thermal displacement estimation process individually on a movable body such as a table and taking into account a displacement of a scale and a degree of inclination of the movable body.

An aspect of the invention relates to a thermal displacement correction method for a machine tool including a support and a movable body that is movably supported by the support and that moves relative to the support based on a command position, the thermal displacement correction method including:

estimating a thermal displacement of the support and a thermal displacement of the movable body independently of each other through a thermal displacement estimation process;
acquiring a displacement of an attachment position of a scale that detects a position of the movable body, based on the thermal displacement of the support;
acquiring an actual position of the movable body relative to the support after thermal deformation of the support, based on the displacement of the attachment position of the scale, and based on the position of the movable body which is detected by the scale;
computing a degree of inclination of the movable body at the actual position of the movable body, based on the actual position of the movable body and the thermal displacement of the support;
acquiring a resultant displacement that is a resultant of the thermal displacement of the support and the thermal displacement of the movable body, based on the thermal displacement of the movable body, the actual position of the movable body and the degree of inclination of the movable body;
computing a correction value for the command position of the movable body, based on the resultant displacement; and
correcting the command position of the movable body based on the correction value.

According to the above aspect, the resultant of the thermal displacements of structural members is acquired on the basis of the analysis results obtained by individually estimating the thermal displacements of the support and the movable body, the displacement of a reference point on the scale and the degree of inclination of the movable body, and then the thermal displacements of the machine tool are estimated. In the above aspect, correction values for the command positions are computed with a higher degree of accuracy than in the case where a thermal displacement is estimated on the supposition that the entirety of the machine tool is a single integrated body, because the displacement of the reference point on the scale based on the thermal displacement of the support and the degree of inclination of the movable body are taken into account in the above aspect.

If the structural analysis according to the finite element method is adopted in individually estimating thermal displacements of the support and the movable body, the thermal displacements of the support and movable body having complicated shapes are estimated with a higher degree of accuracy. In this case, the volume of data for stiffness matrix is smaller and thus the computation amount is smaller than those in the case where the structural analysis is executed on the supposition that the entirety of the machine tool is a single integrated body. Thus, the correction values are computed within a shorter time. Thus, the thermal displacement correction is executed during machining in shorter cycles.

In the thermal displacement correction method for the machine tool according to the above aspect, the actual position of the movable body may be acquired based on a thermal displacement of the scale, which is estimated using a thermal expansion coefficient of the scale, in addition to the displacement of the attachment position of the scale and the position of the movable body which is detected by the scale.

Because the position of the movable body is computed by taking into account the thermal displacement of the scale itself, which is estimated using the linear expansion coefficient of the scale, the correction value for the command position is easily computed with a higher degree of accuracy.

In the thermal displacement correction method for the machine tool according to the above aspect, the movable body may be a structural member including a table of the machine tool.

Because the degree of inclination of the movable body at the position to which the movable body is moved is taken into account, it is possible to more accurately compute the correction value for the command position for the movable body such as the table of the machine tool.

In the thermal displacement correction method for the machine tool according to the above aspect, the movable body may be a column of the machine tool.

By individually estimating a thermal displacement of the column, which supports a main spindle that generates heat, it is possible to more accurately analyze the thermal displacement of the column. As a result, it is possible to more accurately compute the correction value for the command position.

Another aspect of the invention relates to a thermal displacement correction unit for a machine tool including a support and a movable body that is movably supported by the support and that moves relative to the support based on a command position, the thermal displacement correction unit including:

a thermal displacement estimating unit that estimates a thermal displacement of the support and a thermal displacement of the movable body independently of each other through a thermal displacement estimation process;
a scale positional displacement acquiring unit that acquires a displacement of an attachment position of a scale that detects a position of the movable body, based on the thermal displacement of the support;
a movable body actual position acquiring unit that acquires an actual position of the movable body relative to the support after thermal deformation of the support, based on the displacement of the attachment position of the scale, and based on the position of the movable body which is detected by the scale;
an inclination degree computing unit that computes a degree of inclination of the movable body at the actual position of the movable body, based on the actual position of the movable body and the thermal displacement of the support;
a resultant displacement computing unit that acquires a resultant displacement that is a resultant of the thermal displacement of the support and the thermal displacement of the movable body, based on the thermal displacement of the movable body, the actual position of the movable body and the degree of inclination of the movable body;
a correction value computing unit that computes a correction value for the command position of the movable body, based on the resultant displacement; and
a correcting unit that corrects the command position of the movable body based on the correction value.

With the thermal displacement correction unit according to the above aspect, it is possible to produce the effects similar to those produced by the thermal displacement correction method for the machine tool.

BRIEF DESCRIPTION OF THE DRAWINGS

The foregoing and further features and advantages of the invention will become apparent from the following description of example embodiments with reference to the accompanying drawings, wherein like numerals are used to represent like elements and wherein:

FIG. 1 is a perspective view illustrating the overall configuration of a machine tool according to an embodiment of the invention;
FIG. 2 is a partial sectional view illustrating the state of the machine tool according to the embodiment before thermal deformation;
FIG. 3 is a view illustrating a thermal displacement correction unit according to the embodiment;
FIG. 4 is a front view illustrating a movable body after thermal deformation;
FIG. 5 is a sectional view illustrating a support after thermal deformation;
FIG. 6 is a sectional view illustrating the support and the movable body after thermal deformation; and
FIG. 7 is a flowchart illustrating a process executed by a thermal displacement correction unit.

DETAILED DESCRIPTION OF EMBODIMENTS

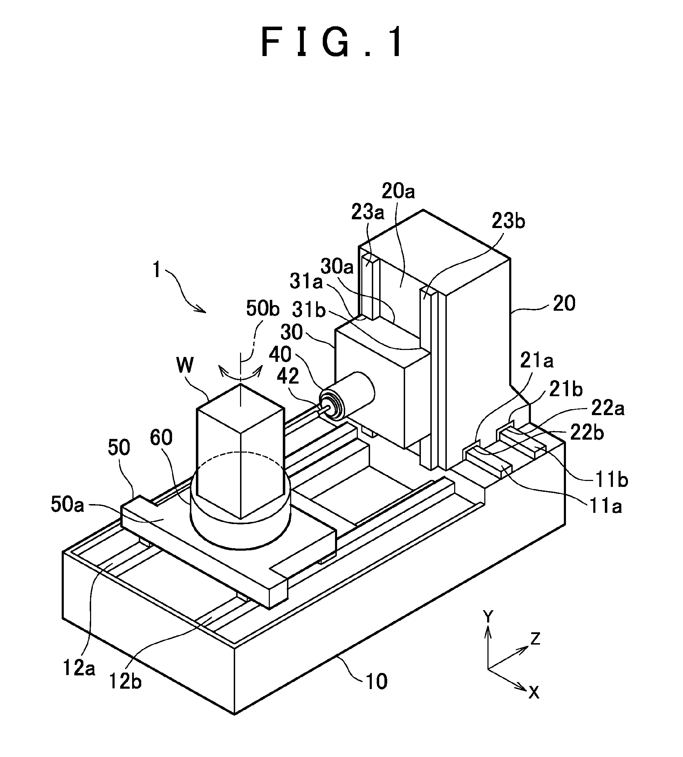

Hereinafter, example embodiments of the invention will be described with reference to the accompanying drawings. For example, a horizontal machining center will be described as an example of a machine tool to which an embodiment of the invention is applied, with reference to FIG. 1 to FIG. 3. A machine tool 1 has three rectilinear axes (X-axis, Y-axis, Z-axis) that are orthogonal to each other, and a vertical rotation axis (B-axis 50b).

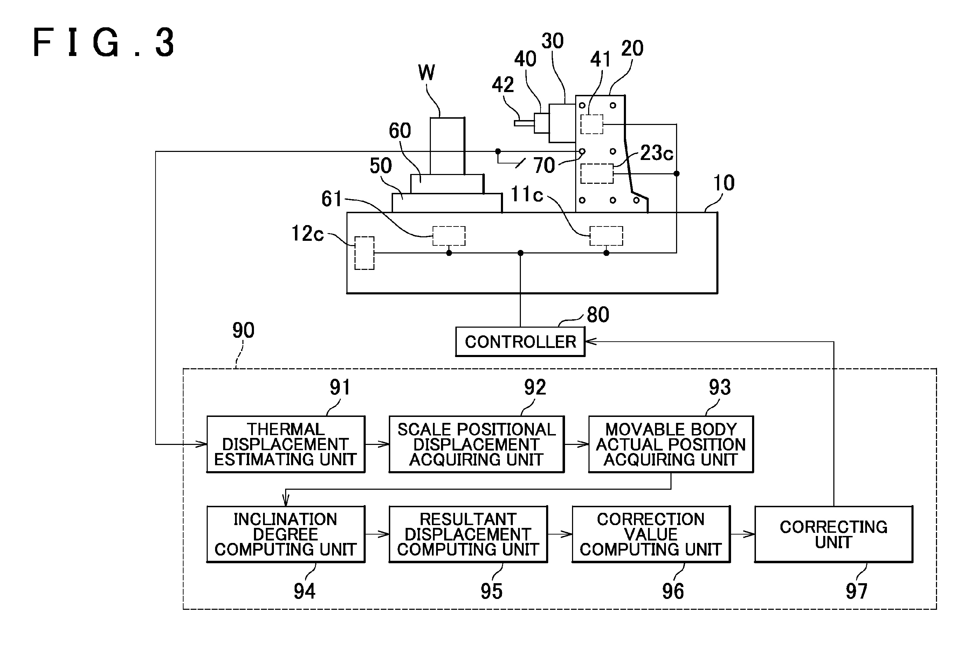

As illustrated in FIG. 1 and FIG. 3, the machine tool 1 includes a bed 10, a column 20, a saddle 30, a main spindle 40, a table 50, temperature sensors 70, a controller 80 and a thermal displacement correction unit 90.

The bed 10 has a generally rectangular parallelepiped shape, and is disposed on a floor. However, the shape of the bed 10 is not limited to a rectangular parallelepiped shape. A pair of X-axis guide rails 11a, 11b is formed on an upper face 10a of the bed 10 such that the X-axis guide rails 11a, 11b extend in the X-axis direction (horizontal direction) and are arranged parallel to each other. The column 20 is slidable in the X-axis direction, on the X-axis guide rails 11a, 11b. On the bed 10, an X-axis ball screw (not illustrated) for driving the column 20 in the X-axis direction is disposed between the X-axis guide rails 11a, 11b, and an X-axis motor 11c for rotating the X-axis ball screw is disposed. An X-axis scale 11d (not illustrated) for detecting a position of the column 20 is disposed on the bed 10. The X-axis scale 11d is, for example, an optical linear encoder.

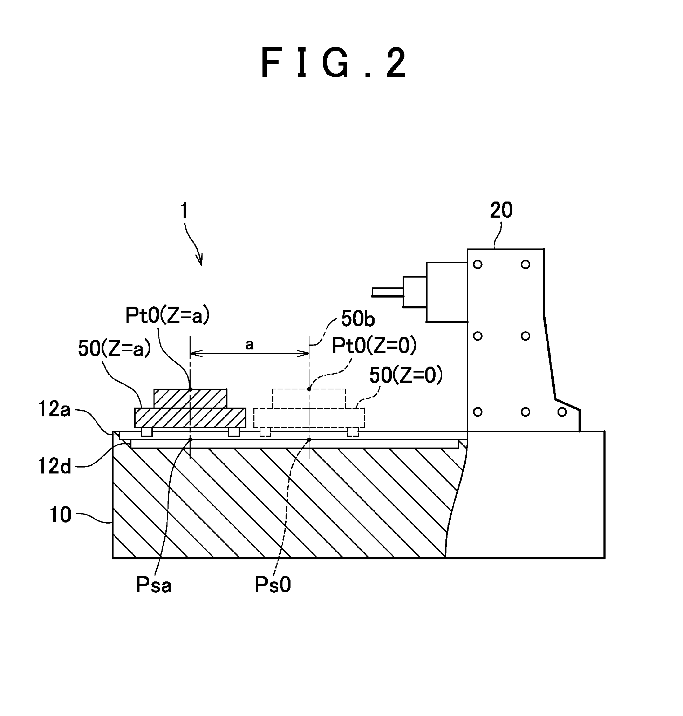

Further, a pair of Z-axis guide rails 12a, 12b is formed on the upper face 10a of the bed 10 such that the Z-axis guide rails 12a, 12b extend in the Z-axis direction (horizontal direction), which is orthogonal to the X-axis direction, and are arranged parallel to each other. The table 50 is slidable in the Z-axis direction, on the Z-axis guide rails 12a, 12b. On the bed 10, a Z-axis ball screw (not illustrated) for driving the table 50 in the Z-axis direction is disposed between the Z-axis guide rails 12a, 12b, and a Z-axis motor 12c for rotating the Z-axis ball screw is disposed. As illustrated in FIG. 2, a Z-axis scale 12d for detecting a position of the table 50 is disposed on the bed 10. The Z-axis scale 12d is, for example, an optical linear encoder.

A pair of X-axis guide grooves 21a, 21b is formed in an X-axis sliding face that is the bottom face of the column 20 such that the X-axis guide grooves 21a, 21b extend in the X-axis direction and are arranged parallel to each other. The X-axis guide grooves 21a, 21b are fitted on the X-axis guide rails 11a, 11b via ball guides 22a, 22b, so that the column 20 is movable relative to the bed 10 in the X-axis direction. As a result, the bottom face of the column 20 is movably held on the upper face of the bed 10.

A pair of Y-axis guide rails 23a, 23b is formed on a Y-axis sliding face 20a that is a side face of the column 20, which extends parallel to the Y-axis, such that the Y-axis guide rails 23a, 23b extend in the Y-axis direction (vertical direction) and are arranged parallel to each other. The saddle 30 is guided by the Y-axis guide rails 23a, 23b to slide in the Y-axis direction. The column 20 is provided with a Y-axis ball screw (not illustrated) for driving the saddle 30 in the Y-axis direction, which is disposed between the Y-axis guide rails 23a, 23b, and a Y-axis motor 23c for rotating the Y-axis ball screw. The column 20 is provided with a Y-axis scale 24d (not illustrated) for detecting a position of the saddle 30. The Y-axis scale 24d is, for example, an optical rectilinear encoder.

A pair of Y-axis guide grooves 31a, 31b is formed in a side face 30a of the saddle 30, which is opposed to the Y-axis sliding face 20a of the column 20, such that the Y-axis guide grooves 31a, 31b extend in the Y-axis direction and are arranged parallel to each other. The Y-axis guide grooves 31a, 31b are fitted on the Y-axis guide rails 23a, 23b, so that the saddle 30 is movable in the Y-axis direction relative to the column 20, and the side face 30a of the saddle 30 is in into close contact with the Y-axis sliding face 20a of the column 20.

The main spindle 40 is disposed so as to be rotated by a spindle motor 41 accommodated in the saddle 30, and supports a tool 42. The tool 42 is fixed at the distal end of the main spindle 40, and is thus rotated in accordance with the rotation of the main spindle 40. The tool 42 is moved in the X-axis direction and the Y-axis direction relative to the bed 10 in accordance with the movements of the column 20 and the saddle 30. The tool 42 is, for example, a ball end mill, an end mill, a drill or a tap.

The table 50 is disposed on and guided by the Z-axis guide rails 12a, 12b so as to be movable in the Z-axis direction relative to the bed 10. The table 50 is provided with a turntable 60. The turntable 60 is supported on a face 50a, and is turnable around the B-axis 50b extending in the vertical direction. The turntable 60 is disposed so as to be rotated by a B-axis motor 61 accommodated in the bed 10. A workpiece W is fixed on the turntable 60 by, for example, magnetic attraction.

The temperature sensors 70 are attached to prescribed portions of structural members of the machine tool 1, that is, the bed 10, the column 20, the saddle 30, the main spindle 40 and the table 50. As the temperature sensors 70, for example, thermocouples or thermistors are used. The pieces of temperature information detected by the temperature sensors 70 are used to estimate thermal displacements of the structural members of the machine tool 1.

The controller 80 is electrically connected to the X-axis scale 11d, the Z-axis scale 12d and the Y-axis scale 24d. The pieces of positional information on the table 50 and the like, which are detected by the X-axis scale 11d, the Z-axis scale 12d and the Y-axis scale 24d, are transmitted, in the form of detection signals, to the controller 80. The controller 80 is electrically connected to the temperature sensors 70 via the thermal displacement correction unit 90 (described later in detail). The pieces of temperature information on the structural members, which are detected by the temperature sensors 70, are processed by the thermal displacement correction unit 90, and are then transmitted to the controller 80.

The controller 80 controls the spindle motor 41 to rotate the tool 42, and controls the X-axis motor 11c, the Z-axis motor 12c, the Y-axis motor 23c and the B-axis motor 61 to move the workpiece W and the tool 42 relative to each other in the X-axis direction, the Z-axis direction and the Y-axis direction, and turn the workpiece W around the B-axis 50b relative to the tool 42, thereby machining the workpiece W.

The controller 80 includes the thermal displacement correction unit 90 that corrects command positions (described later in detail) to eliminate deviations of the relative positions between the workpiece W and the tool 42, which are caused by thermal displacements of the structural members such as the bed 10 and the column 20. It is noted that the thermal displacement correction unit 90 need not be included in the controller 80, and may be an external unit disposed outside the controller 80.

The command positions are command values for the positions of movable bodies of the machine tool 1, that is, the column 20 movable in the X-axis direction, the saddle 30 movable in the Y-axis direction, and the like. The command positions are issued by an NC program for carrying out, for example, machining and measurement. The thermal displacement correction unit 90 obtains correction values for the command positions to correct the command positions on the basis of the correction values. The command positions and correction values are command values for the position of the distal end of the main spindle 40 relative to the workpiece W, that is, command values for the position of the distal end of the tool 42 relative to the workpiece W. The command positions may be regarded as position command values for the X-axis motor 11c, the Z-axis motor 12c, the Y-axis motor 23c and the B-axis motor 61. In the machine tool 1 according to the present embodiment, the command positions are indicated by values on the X-axis, the Y-axis, the Z-axis and the B-axis coordinates. The correction values are indicated as values on the X-axis, the Y-axis and the Z-axis coordinates because the corrections are made on the X-axis, the Y-axis and the Z-axis. The controller 80 controls the X-axis motor 11c, the Z-axis motor 12c, and the Y-axis motor 23c to cause the present positions of the movable bodies on the X-axis, the Z-axis and the Y-axis, which are detected by the axial scales 11d, 12d, 24d, to coincide with the corrected command positions.

Next, the thermal displacement correction unit 90 will be described with reference to FIG. 2 to FIG. 6. In the present embodiment, description will be provided on the thermal displacement correction for the table 50, which is one of the movable bodies of the machine tool 1, in the Z-axis direction, when the table 50 is moved to a position at which the coordinate Z is "a" (Z = a) on the basis of a command position. The support for the table 50, which is a movable body, is the bed 10. It is noted that the thermal displacement correction may be applied to the movable bodies other than the table 50, such as the column 20 and the saddle 30.

FIG. 2 illustrates the state where the structural members of the machine tool 1 are not thermally deformed. The table 50 and part of the bed 10 are illustrated in a section taken along a plane that is parallel to a Y-plane and a Z-plane and that includes the B-axis 50b. The table 50 indicated by dotted lines in the right side in FIG. 2 is located at a reference position at which the B-axis 50b of the table 50 coincides with a reference point Ps0 on the Z-axis scale 12d, that is, at a position at which the coordinate Z is zero (Z = 0). On the other hand, the table 50 indicated by solid lines in the left side in FIG. 2 is located at a position to which the table 50 has been moved on the basis of a command position at which the coordinate Z is a (Z = a), that is, the table 50 is located at the position at which the coordinate Z is a (Z = a). A point Psa is a position that is apart from the reference point Ps0 on the Z-axis scale 12d by a distance a in the positive direction along the Z-axis. A point Pt0 is a point at which the upper face of the table 50 intersects with the B-axis 50b. When the structural members are not thermally deformed, if the table 50 is moved to the position at which the coordinate Z is a (Z = a) in the Z-axis direction, the point Pt0 is also moved to the position at which the coordinate Z is a (Z = a) in the Z-axis direction.

As illustrated in FIG. 3, the thermal displacement correction unit 90 includes a thermal displacement estimating unit 91, a scale positional displacement acquiring unit 92, a movable body actual position acquiring unit 93, an inclination degree computing unit 94, a resultant displacement computing unit 95, a correction value computing unit 96 and a correcting unit 97. The thermal displacement estimating unit 91, the scale positional displacement acquiring unit 92, the movable body actual position acquiring unit 93, the inclination degree computing unit 94, the resultant displacement computing unit 95, the correction value computing unit 96 and the correcting unit 97 may be formed by individual pieces of hardware, or may be realized by software.

The thermal displacement estimating unit 91 estimates thermal displacements of the support and the movable body independently of each other through a thermal displacement estimation process. As described above, the support corresponds to the bed 10, and the movable body corresponds to the table 50.

In the present embodiment, the thermal displacement estimation process is a structural analysis according to a finite element method. For example, material constants, temperature information at each of nodes that are obtained by dividing a structural member into elements, and constraint conditions are required as conditions for the structural analysis. Among the conditions for the structural analysis, only the temperature information at each of the nodes is variable, but the other conditions are known. The temperature information detected by each of the temperature sensors 70 is used as the temperature information at a corresponding one of the nodes. For example, by acquiring the temperature gradients of the bed 10 and the table 50 in advance, temperatures at the nodes are computed based on the pieces of temperature information detected by the temperature sensors 70.

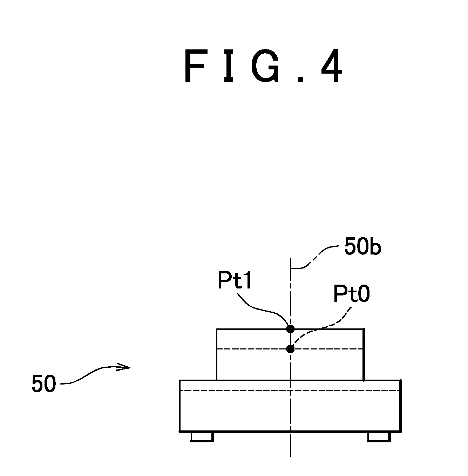

That is, the thermal displacement estimating unit 91 executes structural analysis according to the finite element method, on the bed 10 and the table 50 independently of each other, on the basis of the pieces of temperature information detected by the temperature sensors 70. The estimated thermal displacements of the bed 10 and the table 50 will be referred to as a first thermal displacement N1 and a second thermal displacement N2, respectively. The bed 10 and the table 50 illustrated in FIG. 4 to FIG. 6 are indicated by models that are formulated on the basis of the thermal displacements N1, N2.

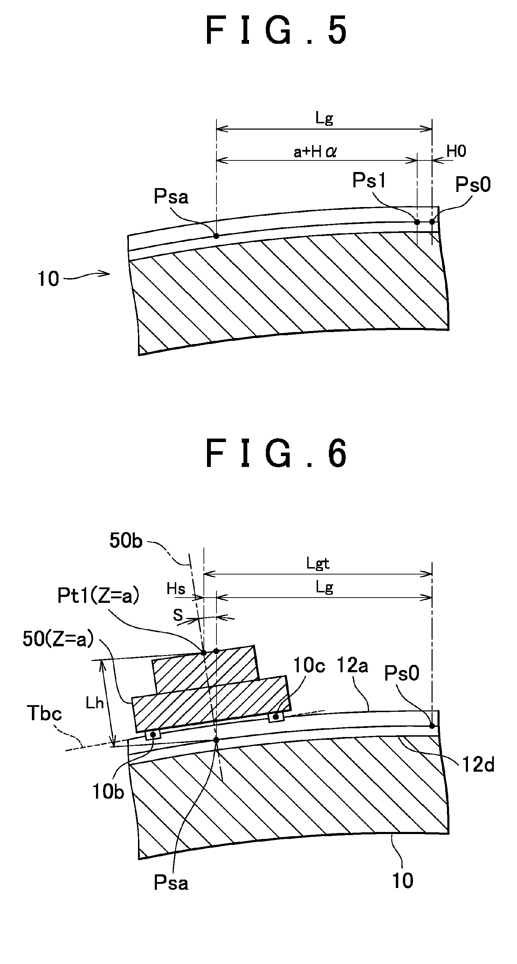

In FIG. 4, the table 50 before thermal deformation is indicated by dotted lines, and the table 50 after thermal deformation is indicated by solid lines. The point Pt0 on the table 50 indicated by the dotted lines is displaced along the B-axis 50b to the point Pt1 on the table 50 indicated by the solid lines after the thermal deformation. FIG. 5 is a sectional view that illustrates the bed 10 after the thermal deformation, taken along a plane that is parallel to a Y-plane and a Z-plane and that includes the B-axis 50b. Due to the thermal deformation of the bed 10, the attachment position of the Z-axis scale 12d is displaced. Specifically, the reference point Ps0 on the Z-axis scale 12d is displaced to a point Ps1.

The scale positional displacement acquiring unit 92 acquires a displacement H0 of the attachment position of the Z-axis scale 12d for detecting the position of a movable body, that is, a displacement H0 of the reference point, on the basis of the first thermal displacement N1 of the support. That is, as illustrated in FIG. 5, the displacement H0 is the length of a line segment that connects the reference point Ps0 and the point Ps1 to each other in the Z-axis direction.

The movable body actual position acquiring unit 93 acquires an actual position g of the movable body relative to the thermally deformed support, on the basis of the displacement H0 of the attachment position of the scale and a detected position of the movable body detected by the scale. The movable body actual position acquiring unit 93 estimates a thermal displacement Hα of the Z-axis scale 12d with the use of a linear expansion coefficient α of the Z-axis scale 12d, and acquires the actual position g of the movable body with the use of the thermal displacement Hα. The actual position g is an actual position of the movable body relative to the reference point Ps0. When the structural members are not thermally deformed, the actual position g coincides with the position detected by the Z-axis scale 12d. On the other hand, when the structure members are thermally deformed, the actual position g is obtained by correcting the position detected by the Z-axis scale 12d, on the basis of the first thermal displacement N1.

Specifically, as illustrated in FIG. 5, after the structural members are thermally deformed, if the table 50 is moved to the position at which the coordinate Z is a (Z = a) on the Z-axis scale 12d, on the basis of the command position, the actual position g is a position that is displaced by a distance Lg from the reference point Ps0 in the Z-axis direction. The distance Lg is obtained, as expressed by Formula (1), by adding together the displacement H0 of the attachment position of the Z-axis scale 12d, a length L in the Z-axis direction, of the line segment that connects the point Psa on the Z-axis scale 12d to the point Ps1 that is the reference point on the Z-axis scale 12d after thermal deformation, and the thermal displacement Hα of the Z-axis scale 12d. It is noted that the length L is a (L = a) because the table 50 is displaced to the position at which the coordinate Z is a (Z = a).

$$Lg = H0 + a + H\alpha \qquad (1)$$

The thermal displacement Hα is a displacement of the point Psa on the Z-axis scale 12d, which corresponds to the coordinate Z = a, and is a displacement the point Psa with reference to the point Ps0. The thermal displacement Hα is computed according to a relational expression expressed by Formula (2) in which the linear expansion coefficient α of the Z-axis scale 12d is used. The linear expansion coefficient α is a value specified by the material of the Z-axis scale 12d. ΔT is a temperature change in the Z-axis scale 12d, which is detected by the temperature sensors 70.

$$H\alpha = a \times \alpha \times \Delta T \qquad (2)$$

The inclination degree computing unit 94 computes a degree S of inclination of the movable body at the actual position g of the movable body, on the basis of the actual position g of the movable body and the thermal displacement of the support, from the result of the structural analysis according to the finite element method. FIG. 6 is a sectional view illustrating the table 50 and the bed 10 after thermal deformation, taken along a plane that is parallel to a Y-plane and a Z-plane and that includes the B-axis 50b. As illustrated in FIG. 6, the structural analysis model of the table 50 is superposed on the structure analysis model of the bed 10 such that the B-axis 50b crosses the point Psa and the table 50 is connected to the Z-axis guide rail 12a to simulate the state where the table 50 is disposed on the bed 10. Connecting points between the table 50 at the actual position g and the Z-axis guide rail 12a are 10b, 10c illustrated in FIG. 6, and a degree of inclination (inclination angel) of a straight line Tbc that connects the point 10b and the point 10c to each other is computed based on thermal displacements of nodes corresponding to the points 10b, 10c. This degree of inclination corresponds to the degree S of inclination of the table 50 at the actual position g of the table 50.

The resultant displacement computing unit 95 acquires a displacement that is a resultant of the first thermal displacement N1 of the support and the second thermal displacement N2 of the movable body on the basis of the second thermal displacement N2 of the movable body, the actual position g of the movable body and the degree S of inclination of the movable body. In the present embodiment, as illustrated in FIG. 6, first, when the table 50 is at the actual position g, a distance Lgt, which is an Z -axis component of the distance from the reference point Ps0 to the point Pt1, is obtained. A difference D between the distance Lgt and the value "a" of the command position at this time is a resultant displacement.

Specifically, as expressed by Formula (3), the distance Lgt is obtained by adding a distance Hs in the Z-axis direction between the point Psa and the point Pt1, to the distance Lg. The distance Hs is obtained according to a relational expression expressed by Formula (4), where Lh is a distance between the point Psa and the point Pt1 in the B-axis direction. The difference D is expressed according to Formula (5).

$$Lgt = Lg + Hs \qquad (3)$$

$$Hs = Lh \times \sin S \qquad (4)$$

$$D = Lgt - a \qquad (5)$$

The correction value computing unit 96 computes a correction value for the command position of the movable body on the basis of the resultant displacement acquired by the resultant displacement computing unit 95. Specifically, the difference D computed according to Formula (5) is used, as it is, as the correction value for the command position (Z-axis command position) of the table 50 in the Z-axis direction.

The correcting unit 97 corrects the command position of the movable body on the basis of the correction value. That is, the correcting unit 97 adds the correction value acquired by the correction value computing unit 96, to the Z-axis command position of the table 50.

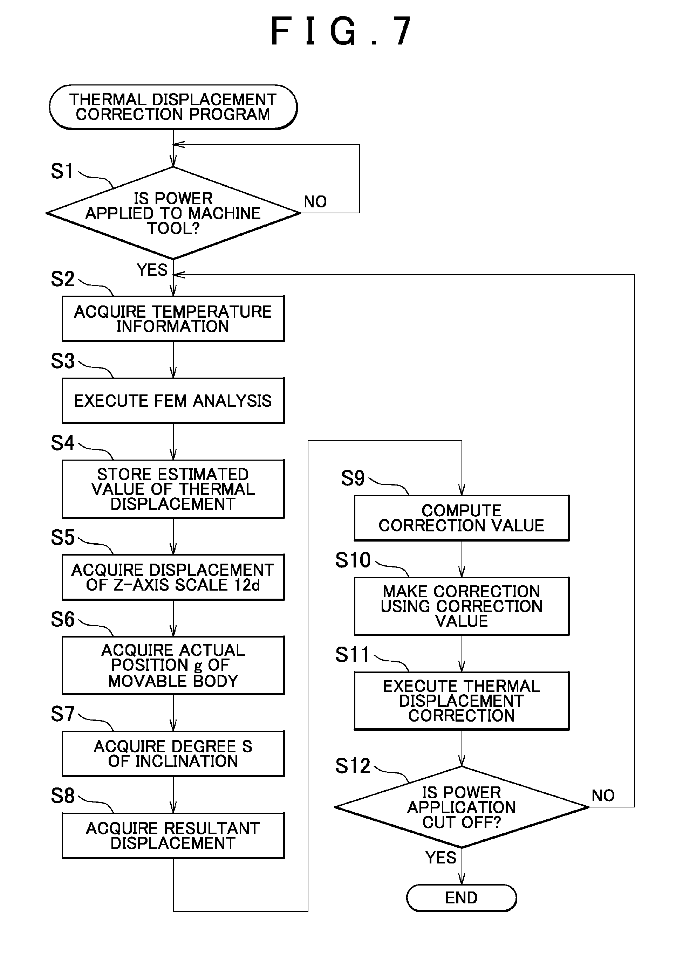

Next, the process executed by the thermal displacement correction unit 90 will be described with reference to FIG. 7. The process is executed by the thermal displacement correction unit 90 after power is applied to the machine tool 1. For example, during machining of the workpiece W or during measurements performed on the workpiece W with the use of a touch probe before and after the machining, the thermal displacement correction process is executed.

As illustrated in FIG. 7, if it is determined that power is applied to the machine tool 1 (Step S1), the thermal displacement estimating unit 91 acquires temperature information from the temperature sensors 70 (Step S2). Next, the structural analysis according to the finite element method is executed on the bed 10 and the table 50 independently of each other to acquire the first thermal displacement N1 and the second thermal displacement N2 (Step S3). Then, the thermal displacement estimating unit 91 stores the thus obtained first thermal displacement N1 and second thermal displacement N2 (Step S4).

Subsequently, the scale positional displacement acquiring unit 92 acquires the displacement of the Z-axis scale 12d on the basis of the first thermal displacement N1 (Step S5). Then, the movable body actual position acquiring unit 93 acquires the actual position g of the table 50 (Step S6), and the inclination degree computing unit 94 computes the degree S of inclination of the table 50 (Step S7). Next, the resultant displacement computing unit 95 acquires the displacement that is resultant of the first thermal displacement N1 and the second thermal displacement N2 (step S8).

Then, the resultant displacement is used as the correction value for the command position (Step S9), and the correcting unit 97 corrects the command position on the basis of the correction value (Step S10). That is, the command position output from the controller 80 is changed to a corrected command position on the basis of the correction value. Then, the controller 80 executes thermal displacement correction for the respective axis command positions during machining of the workpiece W and for the measured values of the workpiece W before and after machining (Step S11), and the thermal displacement correction is continued until application of power to the machine tool 1 is cut off (Step S12). That is, the above-described process is repeatedly executed from step S2 unless application of power to the machine tool 1 is cut off, and the thermal displacement correction program ends when the application of power to the machine tool 1 is cut off.

According to the present embodiment, the resultant of the thermal displacements of the structural members is obtained on the basis of the analysis results obtained by individually estimating the thermal displacements of the support and the movable body, the displacement H0 of the reference point Ps0 on the Z-axis scale 12d and the degree S of inclination of the movable body, and then the thermal displacements of the machine tool 1 are estimated. In the present embodiment, correction values for the command positions are computed with a higher degree of accuracy than in the case where a thermal displacement is estimated on the supposition that the entirety of the machine tool 1 is a single integrated body, because the displacement H0 of the reference point Ps0 on the Z-axis scale 12d based on the first thermal displacement N1 of the support and the degree S of inclination of the movable body are taken into account in the present embodiment.

If the structural analysis according to the finite element method is adopted in individually estimating thermal displacements of the support and the movable body, the thermal displacements of the support and movable body having complicated shapes are estimated with a higher degree of accuracy. In this case, the volume of data for stiffness matrix is smaller and thus the computation amount is smaller than those in the case where the structural analysis is executed on the supposition that the entirety of the machine tool 1 is a single integrated body. Thus, the correction values are computed within a shorter time. Thus, if the structural analysis is adopted for the thermal displacement correction during machining, the thermal displacement correction is executed in shorter cycles.

Because the actual position g of the movable body is computed by taking into account the thermal displacement $H\alpha$ of the Z-axis scale 12d itself, the correction value for the command position is easily computed with a higher degree of accuracy.

The movable body is the structural member of the machine tool 1, including the turntable 60 that is turned, and the distance from the scale for measuring the position of the movable body to a workpiece fixed position (the upper face of the turntable 60) is long. Thus, the thermal displacement due to the degree S of inclination of the movable body, that is, the difference between the Z-axis coordinate value of the movable body, which is measured by the scale, and the Z-axis coordinate value of the workpiece fixed position is large. According to the present embodiment, because the degree S of inclination at a position to which the movable body is displaced is taken into account, it is possible to highly accurately compute the correction value for the command position for the movable body with a long distance from the scale for measuring the position of the movable body to the workpiece fixed position.

In the above-described embodiment, the movable body is the table 50. However, in another embodiment, the column 20 may be adopted as the movable body and thermal displacement correction may be executed. In the other embodiment, thermal displacements of the column 20, which supports the main spindle 40 that generates heat, and the bed 10 are individually estimated. Thus, it is possible to more accurately analyze the thermal displacement of the column 20. As a result, it is possible to more accurately compute the correction value for the command position.

There is provided a thermal displacement correction method for a machine tool, which makes it possible to more accurately correct a thermal displacement of a machining point by executing a thermal displacement estimation process individually on a movable body such as a table and taking into account a displacement of a scale and a degree of inclination of the movable body. The thermal displacement correction method includes: a thermal displacement estimating step (91) of estimating a thermal displacement of a support and a thermal displacement of the movable body independently of each other; a scale positional displacement acquiring step (92) of acquiring a displacement of an attachment position of a scale that detects a position of the movable body; a movable body actual position acquiring step (93) of acquiring an actual position (g) of the movable body relative to the support after thermal deformation of the movable body; an inclination degree computing step (94) of computing a degree (S) of inclination of the movable body at the actual position (g); a resultant displacement computing step (95) of acquiring a resultant displacement that is a resultant of the thermal displacement of the support and the thermal displacement of the movable body; a correction value computing step (96) of computing a correction value based on the resultant displacement; and a correcting step (97) of correcting a command position of the movable body based on the correction value.

**Claims**

1. A thermal displacement correction method for a machine tool including a support and a movable body that is movably supported by the support and that moves relative to the support based on a command position, the thermal displacement correction method comprising:

   estimating a thermal displacement of the support and a thermal displacement of the movable body independently of each other through a thermal displacement estimation process;
   acquiring a displacement of an attachment position of a scale that detects a position of the movable body, based on the thermal displacement of the support;
   acquiring an actual position of the movable body relative to the support after thermal deformation of the support, based on the displacement of the attachment position of the scale, and based on the position of the movable body which is detected by the scale;
   computing a degree of inclination of the movable body at the actual position of the movable body, based on the actual position of the movable body and the thermal displacement of the support;
   acquiring a resultant displacement that is a resultant of the thermal displacement of the support and the thermal displacement of the movable body, based on the thermal displacement of the movable body, the actual position of the movable body and the degree of inclination of the movable body;
   computing a correction value for the command position of the movable body, based on the resultant displacement; and
   correcting the command position of the movable body based on the correction value.

2. The thermal displacement correction method for the machine tool according to claim 1, wherein the actual position of the movable body is acquired based on a thermal displacement of the scale, which is estimated using a thermal expansion coefficient of the scale, in addition to the displacement of the attachment position of the scale and the position of the movable body which is detected by the scale.

3. The thermal displacement correction method for the machine tool according to claim 1, wherein the movable body is a structural member including a table of the machine tool.

4. The thermal displacement correction method for the machine tool according to claim 2, wherein the movable body is a structural member including a table of the machine tool.

5. The thermal displacement correction method for the machine tool according to claim 1, wherein the movable body is a column of the machine tool.

6. The thermal displacement correction method for the machine tool, according to claim 2, wherein the movable body is a column of the machine tool.

7. A thermal displacement correction unit for a machine tool including a support and a movable body that is movably supported by the support and that moves relative to the support based on a command position, the thermal displacement correction unit comprising:

a thermal displacement estimating unit that estimates a thermal displacement of the support and a thermal displacement of the movable body independently of each other through a thermal displacement estimation process;
a scale positional displacement acquiring unit that acquires a displacement of an attachment position of a scale that detects a position of the movable body, based on the thermal displacement of the support;
a movable body actual position acquiring unit that acquires an actual position of the movable body relative to the support after thermal deformation of the support, based on the displacement of the attachment position of the scale, and based on the position of the movable body which is detected by the scale;
an inclination degree computing unit that computes a degree of inclination of the movable body at the actual position of the movable body, based on the actual position of the movable body and the thermal displacement of the support;
a resultant displacement computing unit that acquires a resultant displacement that is a resultant of the thermal displacement of the support and the thermal displacement of the movable body, based on the thermal displacement of the movable body, the actual position of the movable body and the degree of inclination of the movable body;
a correction value computing unit that computes a correction value for the command position of the movable body, based on the resultant displacement; and
a correcting unit that corrects the command position of the movable body based on the correction value.

# F I G . 1

# F I G . 2

# F I G . 3

# FIG.4

# FIG.5

# FIG.6

# F I G . 7

THERMAL DISPLACEMENT
CORRECTION PROGRAM

S1 — IS POWER APPLIED TO MACHINE TOOL? — NO

YES

S2 — ACQUIRE TEMPERATURE INFORMATION

S3 — EXECUTE FEM ANALYSIS

S4 — STORE ESTIMATED VALUE OF THERMAL DISPLACEMENT

S5 — ACQUIRE DISPLACEMENT OF Z-AXIS SCALE 12d

S6 — ACQUIRE ACTUAL POSITION g OF MOVABLE BODY

S7 — ACQUIRE DEGREE S OF INCLINATION

S8 — ACQUIRE RESULTANT DISPLACEMENT

S9 — COMPUTE CORRECTION VALUE

S10 — MAKE CORRECTION USING CORRECTION VALUE

S11 — EXECUTE THERMAL DISPLACEMENT CORRECTION

S12 — IS POWER APPLICATION CUT OFF? — NO

YES

END

**REFERENCES CITED IN THE DESCRIPTION**

**Patent documents cited in the description**

- JP 2006065716 A